# FASCICULE DE BREVET EUROPEEN

(11) **EP 1 886 574 B1**
(45) Date de publication et mention de la délivrance du brevet: **22.04.2009**
(21) Numéro de dépôt: 07290876.7
(22) Date de dépôt: 11.07.2007
(51) Int. Cl.: A23B 4/005, A23B 4/01, A23L 3/00, A23L 3/005, A23L 3/22, H05B 3/60, H05B 3/00

(54) **Systeme de production de produit alimentaire aseptique sterilise par chauffage ohmique avec post addition d'eau salée**
System zur Herstellung eines aseptischen Nahrungsmittels, welches durch ohmische Heizung mit späterer Zugabe von Salzwasser sterilisiert wurde
System for production of aseptic food product sterilised by ohmic heating with later addition of saltwater

(30) Priorité: 24.07.2006 FR 0606758
(43) Date de publication de la demande: 13.02.2008
(73) Titulaire: Campbell Soup Company, Camden NJ 08103-1799 (US)
(72) Inventeur: Dock, Guillaume, 84510 Caumont sur Durance (FR)
(74) Mandataire: Novagraaf IP

(56) Documents cités:
- EP-A1- 1 290 949
- GB-A- 1 235 494
- GB-A- 2 237 722
- US-A1- 5 829 224

## Description

La présente invention concerne le domaine de la préparation de compositions alimentaires, notamment de soupes, ainsi que des installations pour la mise en oeuvre d'un tel procédé.

La stérilisation de produits alimentaires hétérogènes comportant une phase liquide et des particules tels que des soupes pose le problème d'hétérogénéité du chauffage liée à la présence de deux phases, une liquide et une solide.
On connaît le procédé de chauffage de produits alimentaires comportant une phase liquide et des particules, décrit dans les documents EP B1 0 323 654 et GB-A-2237722. EP B1 0 323 654concerne un procédé pour le traitement thermique d'un flux continu d'un mélange de substances, constitué d'un liquide renfermant des particules solides, dans lequel le mélange est chauffé jusqu'à une certaine température souhaitée dans un ou plusieurs échangeurs thermiques. Le mélange de substances est maintenu pendant un certain temps à cette température dans un dispositif de maintien de chaleur, puis est refroidi jusqu'à la température finale souhaitée dans un ou plusieurs échangeurs thermiques. Ce document de l'art propose, pour le traitement thermique d'un mélange de substances renfermant des particules solides de tailles différentes pouvant être scindées en un certain nombre de fractions dimensionnelles, de réguler séparément, en fonction de la taille des particules solides dans une fraction considérée, la durée de séjour des différentes fractions dimensionnelles de particules solides dans le dispositif d'entretien de chaleur. Cette régulation est proposée indépendamment de la durée de séjour du liquide dans le dispositif de maintien de chaleur, les particules solides étant contournées en permanence par le liquide en circulation

Cette solution propose d'appliquer des durées de traitement thermique plus élevées pour les constituants du mélange de plus grande dimension. Pour cela, cette solution conduit à un chauffage à une température adaptée pour garantir la stérilité, et ensuite le maintien de la température est ajusté en fonction de la taille des particules.
L'inconvénient de cette solution est que, pour garantir la stérilisation de tous les constituants, y compris de ceux de la plus grande dimension, il est nécessaire de fixer la température de chauffage initial du mélange à une valeur élevée, adaptée aux constituants de grande dimension, mais excessive pour les constituants de plus petite taille. Cela entraîne une dégradation de la qualité organoleptique du produit alimentaire ainsi préparé.
Pour répondre à cet inconvénient, l'invention concerne, selon son acception la plus générale, un procédé de stérilisation d'une composition alimentaire formée d'un mélange hétérogène d'au moins une phase liquide et de particules solides comprenant quatre étapes :
- une première étape de préparation d'une phase concentrée liquide/particules avec une quantité réduite de sel,
- une seconde étape de stérilisation composée d'une phase de chauffage ohmique et d'une phase de chambrage de la phase concentrée,
- une troisième étape de refroidissement de la phase concentrée stérile,
- une quatrième étape de conditionnement,
la phase concentrée étant mélangée après la phase de chauffage avec une phase aqueuse comprenant de l'eau stérile salée nécessaire à la formulation finale dudit mélange hétérogène d'au moins une phase liquide et de particules solides.
Le chauffage ohmique permet une montée en température rapide préservant les qualités organoleptiques des aliments et est utilisé pour la stérilisation des aliments.

Il permet un chauffage des aliments par le passage d'un courant électrique, la résistance du produit à la circulation de l'électricité provoquant l'élévation de la température. Les dispositifs de chauffage ohmique comprennent un canal central tubulaire aux extrémités duquel sont placées des électrodes percées pour permettre l'introduction d'un fluide dans le tube ainsi que sa collecte. Ces deux électrodes sont à la fois perpendiculaires au canal et à la direction générale d'écoulement du fluide.

Dans la présente invention, le chauffage ohmique est mis en oeuvre selon une forme particulière, adaptée au chauffage séparé de la phase concentrée. La conductivité d'un composé étant dépendant de sa salinité et de sa température, l'ajustement de la salinité de la phase concentrée a pour but d'optimiser les conditions de mise en oeuvre de son chauffage. L'hétérogénéité de chauffage est en effet due en partie à la différence de conductivité électrique des ingrédients dans les produits alimentaires complexes.

En règle générale, les potages et les plats cuisinés ont des taux de sel allant de 0,7 à 1,2%. Ce sel, lors de la préparation des produits, est ajouté dans la phase liquide et se dissout. Cependant la diffusion ionique depuis le liquide jusqu'au coeur des produits solides est relativement lente et difficile à maîtriser industriellement. Il en résulte une grande hétérogénéité de la conductivité électrique des particules. Cette contrainte explique en partie que la plupart des applications de chauffage ohmique ne concernent que des produits homogènes.

Selon un premier mode de réalisation, le mélange de ladite phase concentrée stérile avec ladite phase aqueuse comprenant de l'eau stérile salée, s'effectue entre l'étape de stérilisation et l'étape de refroidissement de sorte à optimiser le refroidissement de ladite phase concentrée stérile.

Avantageusement, ladite phase aqueuse comprenant de l'eau stérile salée est refroidie à une température inférieure à 10°C, avant le mélange avec la phase concentrée stérile.

Selon un second mode de réalisation, le mélange de ladite phase concentrée stérile avec ladite phase aqueuse comprenant de l'eau stérile salée s'effectue au cours du conditionnement dans le contenant final du produit par double dosage aseptique de sorte à améliorer la précision du dosage de chaque phase.

Selon un troisième mode de réalisation, le mélange de ladite phase concentrée chauffée à la température de stérilisation avec ladite phase aqueuse comprenant de l'eau stérile salée chauffée à la température de stérilisation s'effectue avant le chambrage de sorte à limiter les risques de perte de stérilité dus à la mise en oeuvre du mélange.

Selon une variante, la concentration en sel de la partie liquide de la ladite phase concentrée est inférieure à 0,5%.

Selon un mode de réalisation avantageux, la conductivité des composants de ladite phase concentrée est homogène et l'écart de la conductivité des composants ne dépasse pas les facteurs 1 à 3.

Selon une autre variante, la conductivité de ladite phase concentrée est inférieure à 10milliSiemens par centimètre à 25°C.

Avantageusement,la concentration en sel de ladite phase aqueuse dépend de la concentration en sel de la phase concentrée de sorte que la solution issue du mélange des deux phases soit à 0,7% de sel en moyenne.

De préférence, la ladite phase concentrée comprend un épaississant.
Selon un mode de réalisation préféré, la température de chauffage ohmique de la phase concentrée est comprise entre 130°C et 140°C.

Selon un mode de mise en oeuvre particulier, la stérilisation de la phase concentrée est réalisée par passage dans un premier tube de chauffage ohmique assurant une montée en température, puis par passage dans un chambreur intermédiaire assurant l'homogénéisation de la température, puis dans un deuxième tube de chauffage ohmique assurant une deuxième augmentation de température.

L'invention concerne également une installation de stérilisation d'une composition alimentaire formée d'un mélange hétérogène d'au moins une phase liquide et de particules solides, pour la mise en oeuvre du procédé comprenant un mélangeur alimenté d'une part par une phase aqueuse stérile salée, et d'autre part par une phase concentrée liquide/particules avec une quantité réduite de sel. L'installation comporte en outre, un équipement de stérilisation de ladite phase concentrée comprenant au moins un tube de chauffage ohmique et au moins un chambreur ainsi qu'un système de refroidissement.

L'invention sera mieux comprise à la lecture de la description qui suit, se référant aux dessins annexés concernant des exemples non limitatifs de réalisation où :
- la figure 1 représente une vue schématique de l'installation permettant la stérilisation et le conditionnement de produits alimentaires comprenant une section de chauffage ohmique.
- La figure 2 représente une vue schématique de l'installation permettant la stérilisation et le conditionnement de produits alimentaires comprenant deux sections de chauffage ohmique en séries.

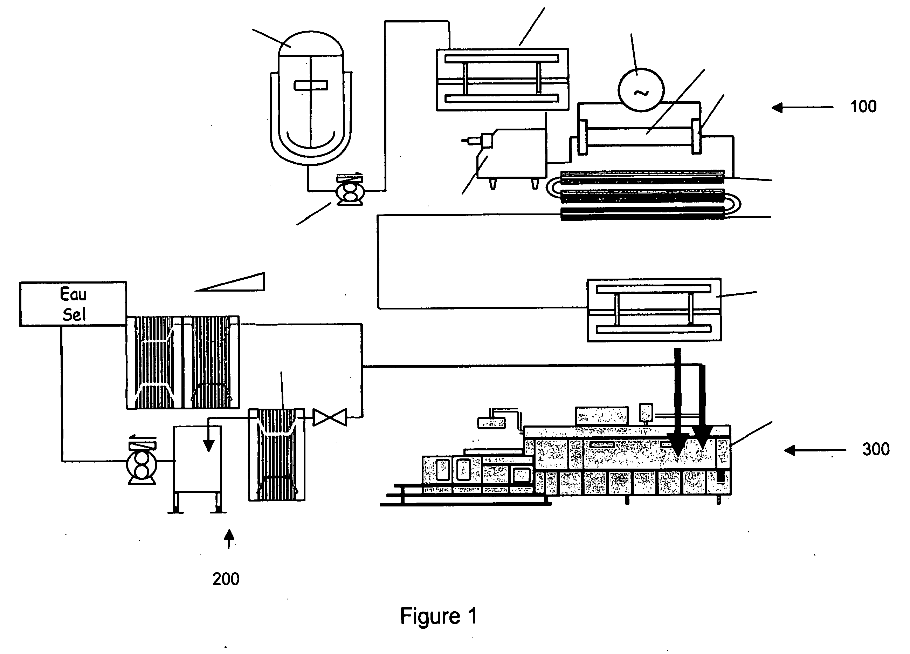

La figure 1 représente une vue schématique d'un premier exemple d'installation pour la mise en oeuvre de l'invention.
Elle comporte deux lignes de production parallèles, la première ligne (100) étant destinée à la préparation et à la stérilisation de la phase concentrée, et la deuxième ligne (200) étant destinée à la préparation et la stérilisation de la phase aqueuse. Un dernier poste (300) réalise le mélange de ces deux phases ainsi stérilisées et préparées ainsi que leur conditionnement.
La première ligne de stérilisation (100) comporte une trémie d'alimentation (3) formée par une cuve intégrant un mélangeur. Cette trémie (3) est alimentée avec des morceaux de légume, des morceaux de viande, de l'eau, un ou plusieurs épaississants, arômes et aromates.
La salinité de ce mélange est vérifiée et ajustée comme il sera décrit ultérieurement. En particulier, la teneur en sel est inférieure à la teneur finale visée, et adaptée principalement en fonction des conditions de chauffage ohmique recherchées. De même, la teneur en eau est ajustée pour permettre de garantir une bonne homogénéité, et de ce fait on cherche à concentrer le mélange afin que les morceaux solides (viandes, légumes) soient véhiculés par une phase porteuse visqueuse assurant une bonne conduction thermique et une bonne portance dans la colonne de chauffage ohmique.
Une pompe positive de transfert (2) à piston ou à lobe assure l'alimentation d'un bac tampon (4a). La caractéristique première de la pompe positive de transfert (2) est de permettre le transfert de produits à gros morceaux tout en préservant l'intégrité des morceaux. Le contenu du bac tampon (4a) sert à l'alimentation en flux continu d'une deuxième pompe (5) qui alimente la colonne de chauffage ohmique (6).
L'ensemble de cette chaîne d'alimentation amont est configuré pour préserver les morceaux solides contenus dans le mélange.
La colonne de chauffage ohmique (6) est composée d'un tube en matériaux isolants et comprend des électrodes (7) alimentées par une source de tension (1). La tension et la durée de passage de la phase concentrée sont ajustées pour garantir une stérilisation de tous les constituants de la phase concentrée, sans excès de chauffage. Les paramètres de chauffage sont fixés par une méthode expérimentale consistant à augmenter de manière incrémentale la durée et/ou la tension appliquée aux électrodes jusqu'à ce que la qualité bactériologique à la sortie de l'installation atteigne un niveau satisfaisant. Le maintien de ces paramètres peut être piloté par un dispositif régulateur relié à une sonde de température mesurant la température à la sortie de la colonne (6).
Le tube de chauffage ohmique (6) peut présenter une configuration particulière afin de permettre un chauffage d'un flux de produit continu et d'uniformiser le temps de séjour des composés du produit alimentaire. Il comprend alors une conduite chauffante de section tubulaire en matériau électriquement isolant présentant à ses deux extrémités une électrode annulaire. Les deux électrodes sont reliées à une source d'alimentation en courant électrique. L'installation de chauffage est alimentée par une pompe d'alimentation entraînée par un premier moteur. Le tube comprend une vis sans fin constituée d'un matériau non conducteur, entraînée par un second moteur commandé pour assurer un débit dans la chambre de chauffe synchrone avec le débit d'alimentation. La vis sans fin délimite des espaces cloisonnés par deux segments consécutifs, assurant un entraînement régulier des produits introduits dans la colonne de chauffage, nonobstant leur hétérogénéité.
La phase concentrée à la sortie du colonne de chauffage ohmique (6) alimente un chambreur (8) formé de tubes assurant le maintien en température pour homogénéiser la température de la phase concentrée, et finaliser le traitement de stérilisation. A la sortie du chambreur (8), la phase concentrée ainsi stérilisée est refroidie dans un échangeur de chaleur tubulaire (9). Les parois de l'échangeur de chaleur tubulaire (9) sont refroidies par une circulation d'eau froide. Puis, la phase concentrée stérile est stockée dans un bac tampon (4b).
La deuxième ligne de stérilisation (200) comporte une alimentation en eau salée dont la salinité est ajustée afin que le produit final, après mélange des deux phases, présente une teneur en sel satisfaisante. La teneur de cette phase liquide est déterminée pour compenser le déficit de sel de la phase concentrée, après mélange final.
Cette ligne (200) comporte un moyen de stérilisation par chauffage dans des échangeurs à plaque (11). Une vanne de régulation ajuste le débit de la phase liquide stérilisée en fonction des teneurs en sel et eau finales recherchées. L'excès de la phase aqueuse est réintroduite dans la deuxième ligne de stérilisation par un circuit de retour.
Les deux phases stérilisées sont ensuite mélangées dans un poste de conditionnement (10).
Cette installation constitue un simple exemple non limitatif de mise en oeuvre de l'invention, et la description qui suit concerne plus spécifiquement les étapes du procédé mises en oeuvre par cette installation.

Dans la phase concentrée, on distingue deux phases, une phase dite porteuse qui est liquide et une phase solide. La phase concentrée comprend tous les ingrédients nécessaires à l'élaboration du produit final. Elle est cependant pourvue d'une quantité d'eau et de sel réduite de sorte à obtenir une phase concentrée ayant une relative homogénéité de conductivité des composants assurant un chauffage homogène entre les particules et la phase porteuse. L'écart de conductivité entre les différents composants ne dépasse pas les facteurs 1 à 3.
Les ingrédients solides présentent une conductivité électrique pouvant être assez faible de l'ordre de 2 à 6 mS/cm à 25°C.
La conductivité moyenne de cette phase porteuse ne peut excéder 10 mS/cm à 25°C. Il en résulte un taux de sel de la phase concentrée qui doit être inférieur à 0,5%.

La phase aqueuse destinée à être mélangée à la phase concentrée après son chauffage, est une solution saline. Par sel, on entend le sel alimentaire qui est principalement constitué de chlorure de sodium bien que des contaminants naturels peuvent également être présents en quantités variables, selon l'origine et la méthode de production du sel. La concentration en sel de cette phase, dépend du ratio de la phase concentrée et du taux de sel présent dans la phase concentrée. Par exemple, pour une phase concentrée à 60 % et salée à 0,5%, la quantité d'eau salée sera de 40% avec un taux de sel de 1,3% pour atteindre une salinité moyenne du produit reconstitué de 0,7%.
La stérilisation de la phase aqueuse dépend de sa concentration en sel. En effet, si la concentration en sel est supérieure à 1,5 %, la stérilisation s'effectue par filtration sur un double filtre comportant des pores de 0,2 µm de diamètre. Par contre, pour des concentrations inférieures à 1,5 % de sel, le produit peut subir une stérilisation thermique classique à 140 °C, en échangeur tubulaire ou en échangeur à plaques tel que schématisé à la figure 1.

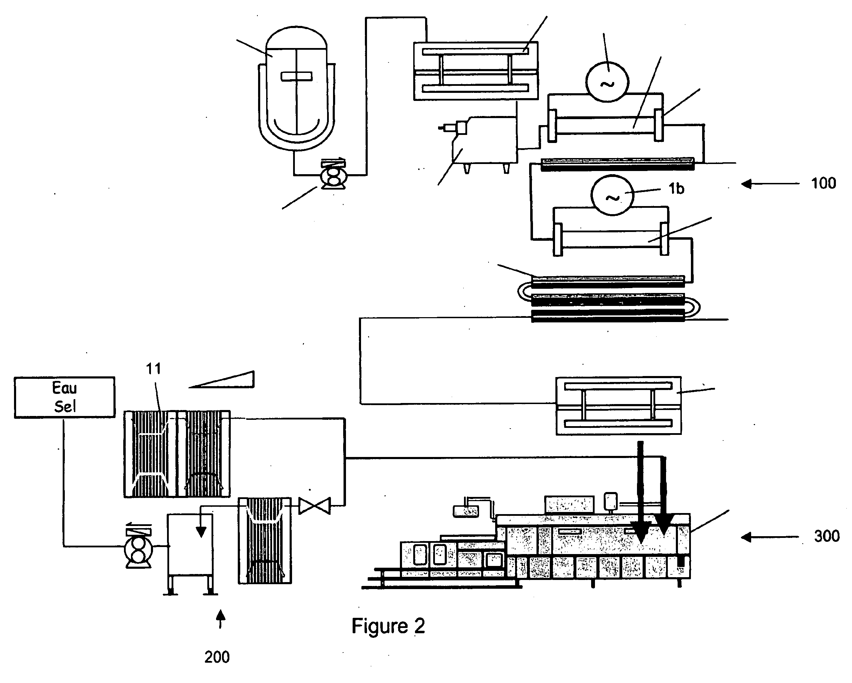

Selon l'invention, la phase concentrée est après chauffage ou après stérilisation, complétée par une phase aqueuse stérile afin d'obtenir la composition définitive du produit alimentaire.
En effet, une fois que la phase concentrée est chauffée par la colonne de chauffage ohmique 6, son mélange avec la phase aqueuse peut avoir lieu indifféremment à toutes les étapes suivantes.
Selon une première variante, le mélange a lieu tel que schématisé en figure 1, lors du conditionnement, par double dosage aseptique, dans le contenant final du produit. Cette technique permet un dosage précis de la phase concentrée puis de la phase aqueuse dans le contenant pré-stérilisé. La stérilisation préalable du contenant peut être effectuée par l'utilisation de peroxyde ou tout autre méthode de stérilisation. Le mélange se fait dans une ambiance stérile c'est-à-dire sous un flux laminaire par exemple ou dans une chambre avec surpression d'air stérile. Le contenant, une fois hermétiquement fermé, peut faire l'objet d'une agitation afin de mélanger les deux phases.
Dans une seconde variante, le mélange se fait plus en amont et notamment à la sortie du chambreur 8. Dans ce cas, la solution saline est refroidie à une température inférieure à 10°C avant son incorporation dans la phase concentrée. Cette technique permet d'optimiser le refroidissement de la phase concentrée car le produit final mélangé doit avoir une température inférieure à 40°C.
Dans une troisième variante, le mélange est réalisé directement après le chauffage ohmique, par mélange des deux solutions chauffées à la température de stérilisation avant le chambreur 8. Cette dernière possibilité permet de faire un mélange en dehors de la zone aseptique et par conséquent de limiter les risques de perte de stérilité dus à la mise en oeuvre du mélange. Une combinaison des possibilités de mélange précédentes peut être envisagée.
Le chauffage ohmique de la phase concentrée peut être amélioré par l'utilisation de deux sections de chauffage ohmique 6a et 6b (figure 2) en série. Selon ce mode de réalisation, les deux sections 6a et 6b sont séparées par un chambreur intermédiaire 8b. Le chambreur intermédiaire 8b permet d'assurer une température homogène entre les particules et le liquide de la phase concentrée avant une nouvelle montée en température dans la seconde section de chauffage ohmique 6b. La conductivité étant fonction de la température du composé, cette homogénéisation des températures permet d'optimiser le second cycle de chauffage ohmique.
Ce chambrage supplémentaire à lieu à des températures encore relativement faibles et n'a donc pas de répercussion importante sur la dégradation organoleptique du produit.
Après la seconde section de chauffage ohmique 6b, le traitement subit par la phase concentrée est le même que précédemment. À savoir, le transit de la phase concentrée par le chambreur final 8 permettant la dégradation des germes ; le refroidissement par l'échangeur de chaleur tubulaire 9 et le conditionnement de la phase concentrée et de la phase aqueuse par le système de conditionnement 10.
L'utilisation d'un chambreur intermédiaire 8b permet une réduction du rapport volume/temps de chambrage final et donc une meilleure préservation des qualités organoleptiques des produits.

## Revendications

1. Procédé de stérilisation d'une composition alimentaire formée d'un mélange hétérogène d'au moins une phase liquide et de particules solides comprenant quatre étapes :
- une première étape de préparation d'une phase concentrée liquide/particules avec une quantité réduite de sel,
- une seconde étape de stérilisation composée d'une phase de chauffage ohmique et d'une phase de chambrage de la phase concentrée,
- une troisième étape de refroidissement de la phase concentrée stérile,
- une quatrième étape de conditionnement
la phase concentrée étant mélangée après la phase de chauffage avec une phase aqueuse comprenant de l'eau stérile salée nécessaire à la formulation finale dudit mélange hétérogène d'au moins une phase liquide et de particules solides.

2. Procédé selon la revendication 1 **caractérisé en ce que** le mélange de ladite phase concentrée stérile avec ladite phase aqueuse comprenant de l'eau stérile salée s'effectue entre l'étape de stérilisation et l'étape de refroidissement de sorte à optimiser le refroidissement de ladite phase concentrée stérile.

3. Procédé selon la revendication 2 **caractérisé en ce que** ladite phase aqueuse comprenant de l'eau stérile salée est refroidie à une température inférieure à 10°C, avant le mélange avec la phase concentrée stérile.

4. Procédé selon la revendication 1 **caractérisé en ce que** le mélange de ladite phase concentrée stérile avec ladite phase aqueuse comprenant de l'eau stérile salée s'effectue au cours du conditionnement dans le contenant final du produit par double dosage aseptique de sorte à améliorer la précision du dosage de chaque phase.

5. Procédé selon la revendication 1 **caractérisé en ce que** le mélange de ladite phase concentrée chauffée à la température de stérilisation avec ladite phase aqueuse comprenant de l'eau stérile salée chauffée à la température de stérilisation s'effectue avant le chambrage de sorte à limiter les risques de perte de stérilité dus à la mise en oeuvre du mélange.

6. Procédé de stérilisation selon l'une quelconque des revendications 1 à 5 **caractérisé en ce que** la concentration en sel de la partie liquide de la ladite phase concentrée est inférieure à 0,5%.

7. Procédé de stérilisation selon la revendication 1, **caractérisé en ce que** la première étape de préparation d'une phase concentrée liquide/particules avec une quantité réduite de sel comprend la vérification et l'ajustement de la salinité de ladite phase de telle sorte que le rapport des conductivités des composants ne dépasse pas 3.

8. Procédé de stérilisation selon l'une quelconque des revendications 1 à 7 **caractérisé en ce que** la conductivité des composants de ladite phase concentrée est homogène et le rapport des conductivités des composants ne dépasse pas 1 à 2.

9. Procédé de stérilisation selon l'une quelconque des revendications 1 à 8 **caractérisé en ce que** la conductivité de ladite phase concentrée est inférieure à 10milliSiemens par centimètre à 25°C.

10. Procédé de stérilisation selon l'une quelconque des revendications 1 à 9 **caractérisé en ce que** la concentration en sel de ladite phase aqueuse dépend de la concentration en sel de la phase concentrée de sorte que la solution issue du mélange des deux phases soit à 0,7% de sel en moyenne.

11. Procédé de stérilisation selon l'une quelconque des revendications précédentes **caractérisé en ce que** la ladite phase concentrée comprend un épaississant.

12. Procédé de stérilisation selon l'une quelconque des revendications précédentes **caractérisé en ce que** la température de chauffage ohmique de la phase concentrée est comprise entre 130°C et 140°C.

13. Procédé de stérilisation selon l'une quelconque des revendications précédentes **caractérisé en ce que** la stérilisation de la phase concentrée est réalisé par passage dans un premier tube de chauffage ohmique assurant une montée en température, puis par passage dans un chambreur intermédiaire assurant l'homogénéisation de la température, puis dans un deuxième tube de chauffage ohmique assurant une deuxième augmentation de température.

14. Installation de stérilisation d'une composition alimentaire formée d'un mélange hétérogène d'au moins une phase liquide et de particules solides, pour la mise en oeuvre du procédé selon l'une au moins des revendications précédentes, **caractérisé en ce qu'**elle comprend une phase aqueuse stérile salée, une phase concentrée liquide/particules avec une quantité réduite de sel et un mélangeur alimentée d'une part par la phase aqueuse stérile salée, et d'autre part par la phase concentrée liquide/particules avec une quantité réduite de sel, l'installation comportant en outre un équipement de stérilisation de ladite phase concentrée comprenant au moins un tube de chauffage ohmique et au moins un chambreur ainsi qu'un système de refroidissement.

## Claims

1. A method for sterilizing a food composition composed of a heterogeneous mixture of at least one liquid phase and solid particles including four steps:
- a first step of preparing a liquid/particles concentrated phase with a reduced quantity of salt,
- a second step of sterilizing consisting of a phase of ohmic heating and a phase of holding the concentrated phase,
- a third step of cooling the sterile concentrated phase,
- a fourth step of packaging
the concentrated phase being mixed, after the heating phase, with an aqueous phase comprising the salted sterile water required for the final formulation of said heterogeneous mixture of at least one liquid phase with solid particles.

2. A method according to claim 1, **characterised in that** the mixture of said sterile concentrated phase with said aqueous phase comprising salted sterile water is carried out between the step of sterilizing and the step of cooling so as to optimize the cooling of said sterile concentrated phase.

3. A method according to claim 2, **characterised in that** said aqueous phase including salted sterile water is cooled down to a temperature lower than 10°C prior to be mixed with the sterile concentrated phase.

4. A method according to claim 1, **characterised in that** the mixture of said sterile concentrated phase with said aqueous phase comprising salted sterile water is carried out during the packaging in the final container of the product through a double aseptic dosage, so as to improve the accuracy of the dosage of each phase.

5. A method according to claim 1, **characterised in that** the mixture of said concentrated phase heated to the sterilization temperature with said aqueous phase, comprising salted sterile water heated to the sterilization temperature is carried prior to the holding, so as to limit the risk of sterility loss resulting from the implementation of the mixture.

6. A sterilization method according to any one of claims 1 to 5, **characterised in that** the salt concentration of the liquid part of said concentrated phase is less than 0.5%.

7. A sterilization method according to claim 1, **characterised in that** the first step of preparing the liquid/particles concentrated phase with a reduced quantity of salt includes the checking and the setting of salinity of said phase, so that the ratio of the conductivity of components does not exceed 3.

8. A sterilization method according to any one of claims 1 to 7, **characterised in that** the conductivity of the components of said concentrated phase is homogeneous and the ratio of the conductivity of the components does not exceed 1 to 2.

9. A sterilization method according to any one of claims 1 to 8, **characterised in that** the conductivity of said concentrated phase is less than 10 mill Siemens per centimeter at 25°C.

10. A sterilization method according to any one of claims 1 to 9, **characterised in that** the salt concentration of said aqueous phase depends on the salt concentration of the concentrated phase, so that the solution resulting from the mixture of both phases is 0.7% of salt on an average.

11. A sterilization method according to any one of the preceding claims, **characterised in that** said concentrated phase includes a thickener.

12. A sterilization method according to any one of the preceding claims, **characterised in that** the ohmic heating temperature of the concentrated phase is between 130°C and 140°C.

13. A sterilization method according to any one of the preceding claims, **characterised in that** the sterilization of the concentrated phase is performed through the passage in a first ohmic heating tube providing the rise in temperature then through the passage in an intermediate holder providing the homogenization of temperature, then in a second ohmic heating tube providing a second rise in temperature.

14. An installation for sterilizing a food composition composed of an heterogeneous mixture of at least one liquid phase in solid particles for the implementation of the method according to at least one of the preceding claims, **characterised in that** it includes a salted sterile aqueous phase, a liquid/particles concentrated phase with a reduced quantity of salt and a mixture supplied on the one hand by the salted sterile aqueous phase and on the other hand by the liquid/particles concentrated phase with a reduced quantity of salt, the installation also comprising sterilization equipment for said concentrated phase including at least one ohmic heating tube and at least one holder as well as a cooling system.

## Patentansprüche

1. Sterilisierungsverfahren einer Nahrungsmittelzusammensetzung, die aus einer heterogenen Mischung aus wenigstens einer flüssigen Phase und festen Partikeln gebildet wird, welche vier Stufen umfasst:
- eine erste Zubereitungsstufe einer konzentrierten Phase Flüssigkeit / Partikel mit einer verringerten Salzmenge,
- eine zweite Sterilisierungsstufe, die aus einer ohmschen Erhitzungsphase und einer Einsenkphase der konzentrierten Phase gebildet wird,
- eine dritte Kühlstufe der konzentrierten sterilen Phase,
- eine vierte Verpackungsstufe,
wobei die konzentrierte Phase nach der Erhitzungsphase mit einer wässrigen Phase gemischt wird, die steriles Salzwasser umfasst, das zur endgültigen Formulierung der genannten heterogenen Mischung aus wenigstens einer flüssigen Phase und festen Partikeln notwendig ist.

2. Verfahren gemäß Anspruch 1, **dadurch gekennzeichnet, dass** die Mischung der genannten sterilen konzentrierten Phase mit der genannten, steriles Salzwasser umfassenden wässrigen Phase zwischen der Sterilisierungsphase und der Abkühlphase derart erfolgt, dass die Abkühlung der genannten sterilen konzentrierten Phase optimiert wird.

3. Verfahren gemäß Anspruch 2, **dadurch gekennzeichnet, dass** die genannte, steriles Salzwasser umfassende wässrige Phase vor dem Mischen mit der konzentrierten sterilen Phase auf eine Temperatur von unter 100°C abgekühlt wird.

4. Verfahren gemäß Anspruch 1, **dadurch gekennzeichnet, dass** die Mischung der genannten konzentrierten sterilen Phase mit der genannten, steriles Salzwasser umfassenden wässrigen Phase im Verlauf der Verpackung in den endgültigen Behälter des Produkts durch doppelte aseptische Dosierung derart erfolgt, dass die Präzision der Dosierung jeder Phase verbessert wird.

5. Verfahren gemäß Anspruch 1, **dadurch gekennzeichnet, dass** die Mischung der genannten, auf die Sterilisierungstemperatur aufgeheizten, konzentrierten Phase mit der genannten, steriles Salzwasser umfassenden, auf die Sterilisierungstemperatur aufgeheizten, wässrigen Phase vor dem Einsenken derart erfolgt, dass die auf die Umsetzung der Mischung zurückzuführenden Risiken des Verlustes der Sterilität begrenzt werden.

6. Sterilisierungsverfahren gemäß Anspruch 1 bis 5, **dadurch gekennzeichnet, dass** die Salzkonzentration des flüssigen Teils der genannten konzentrierten Phase unterhalb von 0,5 % liegt.

7. Sterilisierungsverfahren gemäß Anspruch 1, **dadurch gekennzeichnet, dass** die erste Zubereitungsstufe einer konzentrierten Phase Flüssigkeit / Partikel mit einer reduzierten Salzmenge die Überprüfung und die Anpassung des Salzgehaltes der genannten Phase derart umfasst, dass das Verhältnis der Leitfähigkeit der Komponenten ein Verhältnis von 3 nicht übersteigt.

8. Sterilisierungsverfahren gemäß Anspruch 1 bis 7, **dadurch gekennzeichnet, dass** die Leitfähigkeit der Komponenten der genannten konzentrierten Phase homogen ist und das Verhältnis der jeweiligen Leitfähigkeit der Komponenten ein Verhältnis von 1 zu 2 nicht übersteigt.

9. Sterilisierungsverfahren gemäß Anspruch 1 bis 8, **dadurch gekennzeichnet, dass** die Leitfähigkeit der genannten konzentrierten Phase bei 25°C unter 10 Tausendstel pro Zentimeter liegt.

10. Sterilisierungsverfahren gemäß Anspruch 1 bis 9, **dadurch gekennzeichnet, dass** die Salzkonzentration der genannten wässrigen Phase von der Salzkonzentration der konzentrierten Phase derart abhängt, dass die aus der Mischung der zwei Phasen hervorgegangene Lösung im Durchschnitt zu 0,7 % aus Salz besteht.

11. Sterilisierungsverfahren gemäß einem der vorherigen Ansprüche, **dadurch gekennzeichnet, dass** die genannte konzentrierte Phase ein Dickungsmittel umfasst.

12. Sterilisierungsverfahren gemäß einem der vorherigen Ansprüche, **dadurch gekennzeichnet, dass** die ohmsche Erhitzungstemperatur der konzentrierten Phase zwischen 130°C und 140°C inbegriffen ist.

13. Sterilisierungsphase gemäß einem der vorherigen Ansprüche, **dadurch gekennzeichnet, dass** die Sterilisierung der konzentrierten Phase durch den Übergang in eine erste ohmsche Heizröhre realisiert wird, die einen Temperaturanstieg gewährleistet, dann durch den Übergang in eine intermediäre Heizschlange, die die Homogenisierung der Temperatur gewährleistet, dann in eine zweite ohmsche Heizröhre, die eine zweite Temperaturerhöhung gewährleistet.

14. Sterilisierungsanlage einer Lebensmittelzusammensetzung, die aus einer heterogenen Mischung aus wenigstens einer flüssigen Phase und festen Partikeln gebildet wird, für die Umsetzung des Verfahrens gemäß wenigstens einem der vorherigen Ansprüche, **dadurch gekennzeichnet, dass** sie eine salzige, sterile, wässrige Phase, eine konzentrierte Phase Flüssigkeit / Partikel mit einer reduzierten Salzmenge und einem Mischer umfasst, die einerseits durch die salzige, sterile, wässrige Phase versorgt wird und andererseits durch die konzentrierte Phase Flüssigkeit / Partikel mit einer reduzierten Salzmenge, wobei die Anlage darüber hinaus eine Sterilisierungsausrüstung der genannten konzentrierten Phase umfasst, die wenigstens eine ohmsche Heizröhre und wenigstens eine Heizschlange sowie ein Kühlsystem umfasst.
